# EUROPEAN PATENT APPLICATION

(11) **EP 1 229 343 A1**
(43) Date of publication of application: **07.08.2002**
(21) Application number: 01300891.7
(22) Date of filing: 31.01.2001
(51) Int. Cl.: G01S 5/00

(54) **A system and method for determining the location of a mobile**

(71) Applicant: BRITISH TELECOMMUNICATIONS public limited company, London EC1A 7AJ (GB)
(72) Inventor: The designation of the inventor has not yet been filed
(74) Representative: Maggs, Michael Norman

(57) **Abstract**

A system and method for determining the location of a mobile, for example the position of a person (10) carrying a mobile radio handset (12) makes use of receivers on nearby vehicles (20,22,24) for triangulation or timing measurements. The precise locations of the vehicles themselves is determined from GPS satellites (40) enhanced with signals received from fixed aerial locations (30,32,34). A control centre (50) determines the absolute location of the handset (12) by a weighted combination of measurements taken at the vehicles and at the fixed aerial sites.

## Description

The present invention relates to a system and method for determining the location of a mobile, and particularly although not exclusively to locating the position of a person carrying a mobile radio handset.

Determining the precise location of a person (for example a police officer) carrying a mobile radio handset is not always easy. Providing individual radio handsets with GPS (Global Positioning System) capabilities is expensive and, in any event, mobile GPS receivers do not operate well within buildings or in other situations where the sky is not in clear view. One way of dealing with this problem is to supplement the GPS signal with additional signals derived from ground-based aerials: conventionally at the same physical locations as the radio aerials. While this does improve userability of the system and to some extent makes location finding available within buildings, measurement areas are still large since radio aerial sites are typically located in elevated locations and are consequently often sparsely located, many miles apart.

According to a first aspect of the present invention there is provided a system for determining the location of a mobile 10 having a radio transmitter 12 for transmitting a location signal, a plurality of mobile receivers for receiving the location signal, means for determining the locations of the mobile receivers, and means for determining the location of the mobile 10 at least partly from the signals received by the mobile receivers and the locations of the mobile receivers.

Such a system provides an extremely convenient and reasonably inexpensive mechanism for determining the location of radio handsets, and the person using them. The mobile receivers are preferably carried on vehicles which, when help is requested by an individual holding the radio handset, will rapidly converge towards that individual's location. As the vehicles converge, the locational accuracy with which the individual can be placed increases.

Location may be determined either by triangulation, or by timing methods.

Where appropriate, GPS or other satellite-based location finding systems may be used, enhanced with additional signals from fixed aerials on the ground.

According to a further aspect of the invention there is provided a method for determining the location of a mobile 10 comprising transmitting from the location of the mobile a location signal, receiving the location signal at a plurality of mobile receivers, determining the location of the mobile receivers, and determining the location of the mobile at least partly from the signals received by the mobile receivers and the locations of the mobile receivers.

The invention extends to a method of tracking a mobile comprising determining the location of the mobile as described above, and moving the mobile receivers (which may be on or associated with vehicles) towards the determined position.

The invention may be carried into practice in a number of ways and one specific embodiment will now be described, by way of example, with reference to the accompanying figure which schematically illustrates the system.

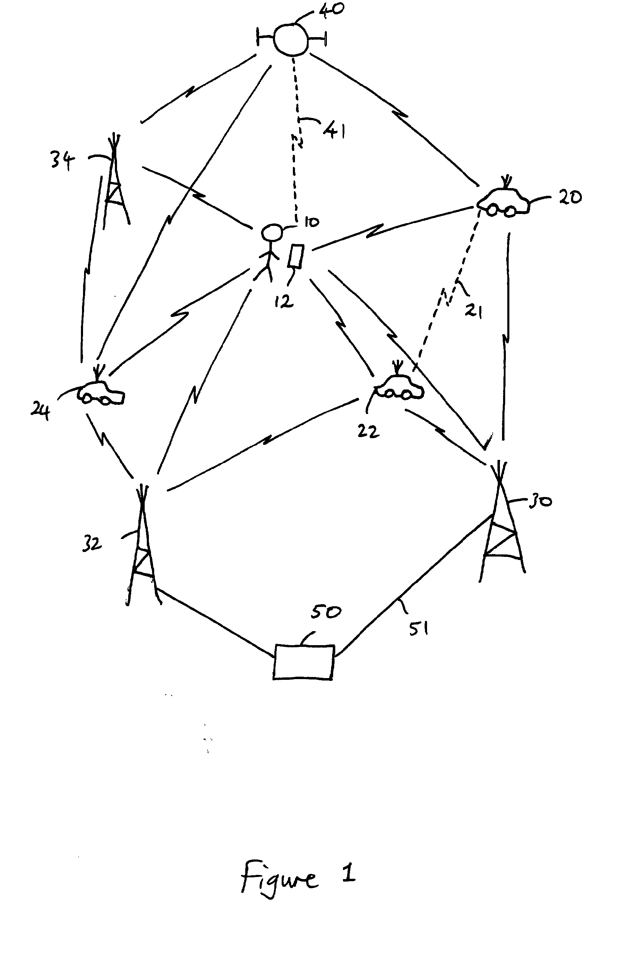

The purpose of the system illustrated in Figure 1 is to locate, or track, an individual such as a police officer 10 who is carrying a mobile radio handset 12. More generally, of course, the system could be used to locate or track any mobile. For clarity, not all of the possible radio and location-finding signals are shown in the drawing.

In order to locate or track the individual 10, the signals emitted by the mobile radio handset 12 are detected by receivers in nearby vehicles 20,22,24. Alternatively, the vehicles could be dispensed with and replaced with other mobiles, for example individuals on foot carrying the appropriate radio communications equipment. Location may be achieved either by triangulating the signals received from the handset or, alternatively, by timing measurements to determine the absolute or relative distances between each of the vehicles and the handset. In the latter case, the radio handset could either automatically send out periodic timing signals (which of course requires internal clocks within the handset and the vehicles to be accurately synchronised) or alternatively each of the vehicles could, as necessary, transmit a "ping" signal to the handset, requesting a response. The distance may then be determined from the roundtrip time. Yet another possibility would be for a remote radio antenna 34 to instruct the handset to transmit an appropriate signal.

To avoid possible interference with other mobile handsets (not shown) that may be nearby, the handset 12 identifies itself with a unique ID transmitted as part of its location-finding signal. The handset is preferably part of a digital radio communications network.

Triangulation or timing signals at the vehicles determines the relative location of the mobile handset 12, but an absolute location is of course needed. That may be determined once the absolute position of the vehicles 20,22,24 is known. Vehicle positions are determined by measurements from GPS satellites 40, supplemented with additional signals from fixed radio antennae 30,32,34 (which may be the same antennae used for the voice channels). Other non-GPS methods of locating the vehicles could of course be used, if desired, for example using timing or triangulation from the land aerials 30,32,34 only.

In order to enhance further the location-finding accuracy, the location of the handset 12 may be independently determined from the aerials 30,32,34 as well as from the vehicles 20,22,24. Also, if the handset is equipped with GPS capabilities, and the individual being tracked is outside, the handset may in addition make use of signals 41 received from GPS satellites 40. In certain circumstances, it may also be advantageous for location-finding signals 21 to be exchanged between vehicles in order more accurately to fix the positions of the vehicles relative to one another.

Calculation of the absolute position of the handset 12 may be carried out using any desired combination of mobile, fixed and satellite aerial sites, with appropriate weightings being applied depending upon probable errors. For example, where the vehicles are close to the position of the handset, and the vehicle locations are known accurately, the vehicular timing or triangulation measurements will be given a higher weighting than corresponding measurements taken at fixed locations which are further away. Of course, the greater the number of vehicles providing measurements, the greater the resultant positional accuracy.

Where the mobile handset 12 is itself equipped with GPS or other position-finding facilities, it may itself determine, at least approximately, its own location, and then transmit that information either to the vehicles, to the fixed aerial locations, or both. Likewise, the GPS or other position-locating equipment within each vehicle may itself determine the vehicle's position and may then transmit that information to other vehicles, to the fixed aerial sites and/or to the mobile handset.

The fixed aerials themselves receive GPS signals in the normal way, with any discrepancy between the known aerial position and the GPS-derived aerial position being used to correct the GPS-derived location of the vehicles (and of the handset where that is GPS-enabled).

The calculations to determine the current best estimate of the handset's absolute position may be carried out at any appropriate location on the network, typically at a central control 50 which communicates with the aerials 30,32,34 by conventional land-lines 51. Alternatively, the calculation could be carried out within the individual vehicles, or perhaps split across the network, with an initial position estimate being provided by the handset itself, the vehicles determining their own locations and reporting those back to the control centre 50 which will consolidate the information and retransmit to the vehicles in real-time the current best estimate of the handset's absolute location.

In a scenario where a police officer uses a hand-held mobile radio to call for assistance, vehicles will typically converge rapidly to the location. Also, patrol vehicles may already be in the area. Position location will then be calculated and updated on a real-time basis using measurements from a combination of both the vehicles and the fixed aerial sites. As assisting vehicles rapidly converge, the positional accuracy increases.

It will be understood of course that the individual or mobile being located or tracked may be moving (for example in a vehicle) or may temporarily be fixed in location (for example within a building). Once the mobile has been located, the position may be indicated on an electronic map, viewable by the drivers of the vehicles. The map or other location information may be integrated with a navigation system in each vehicle, to assist the driver in reaching the desired location as rapidly as possible.

## Claims

1. A system for determining the location of a mobile (10) having a radio transmitter (12) for transmitting a location signal, a plurality of mobile receivers for receiving the location signal, means for determining the locations of the mobile receivers, and means for determining the location of the mobile (10) at least partly from the signals received by the mobile receivers and the locations of the mobile receivers.

2. A system as claimed in claim 1 in which the mobile receivers are carried on vehicles (20,22,24).

3. A system as claimed in claim 1 or claim 2 in which the mobile receivers are carried by individuals on foot.

4. A system as claimed in any one of the preceding claims in which the location of the mobile (10) is determined at least partly by triangulating signal measurements taken at each of the mobile receivers.

5. A system as claimed in any one of claims 1 to 3 in which the location of the mobile (10) is determined at least partly by timing receipt of the location signal at each of the mobile receivers.

6. A system as claimed in any one of the preceding claims in which the location of the mobile (10) is determined at least partly by triangulating signal measurements taken at additional fixed aerial locations (30,32,34).

7. A system as claimed in any one of claims 1 to 5 in which the location of the mobile (10) is determined at least partially by timing receipt of the location signal taken at each of a plurality of additional fixed aerial locations (30,32,34).

8. A system as claimed in any one of the preceding claims in which the means for determining the locations of the mobile receivers includes GPS receivers associated with the mobile receivers.

9. A system as claimed in any one of the preceding claims in which the means for determining the locations of the mobile receivers includes a mobile location system arranged to receive signals from or send signals to a plurality of fixed aerials (30,32,34).

10. A system as claimed in any one of the preceding claims in which the mobile (10) includes a locating radio receiver arranged to receive external location signals, the location of the mobile being determined at least partly from the received external location signals.

11. A system as claimed in claim 10 in which the location of the mobile (10) is determined at least partly by GPS satellite signals (41) received by the locating radio receiver.

12. A system as claimed in claim 10 or claim 11 in which the location of the mobile (10) is determined at least partly by signals transmitted by mobile transmitters associated with each of the mobile receivers.

13. A system as claimed in any one of the preceding claims when dependent upon claim 2 or claim 3 in which the location of the mobile (10) is determined at a control centre (50), and is then transmitted to the vehicles (20,22,24) or individuals on foot.

14. A system as claimed in claim 13 in which the location of the mobile (10) is fed into a navigation system carried by the vehicle or the individual, to assist the vehicle or individual in moving towards the said location.

15. A method for determining the location of a mobile (10) comprising transmitting from the location of the mobile a location signal, receiving the location signal at a plurality of mobile receivers, determining the location of the mobile receivers, and determining the location of the mobile at least partly from the signals received by the mobile receivers and the locations of the mobile receivers.

16. A method of tracking a mobile (10) comprising determining the location of the mobile according to the method of claim 15, and moving the mobile receivers towards the determined position.

17. A method of tracking a mobile as claimed in claim 16 including feeding the determined position of the mobile into a navigation system, and moving the mobile receivers with the aid of the navigation system.
